Europäisches Patentamt

European Patent Office

Office européen des brevets

(19)

(11) **EP 0 726 877 B1**

(12) **EUROPÄISCHE PATENTSCHRIFT**

(45) Veröffentlichungstag und Bekanntmachung des Hinweises auf die Patenterteilung:
**05.01.2000 Patentblatt 2000/01**

(51) Int Cl.[7]: **C01F 7/36**

(21) Anmeldenummer: **94927474.0**

(22) Anmeldetag: **15.09.1994**

(86) Internationale Anmeldenummer:
**PCT/DE94/01089**

(87) Internationale Veröffentlichungsnummer:
**WO 95/12547 (11.05.1995 Gazette 1995/20)**

(54) **VERFAHREN ZUR HERSTELLUNG VON WASSERDISPERGIERBAREN TONERDEHYDRATEN BÖHMITISCHER STRUKTUR**

PROCESS FOR PRODUCING WATER-DISPERSIBLE ALUMINIUM HYDRATES WITH A BOEHMITIC STRUCTURE

PROCEDE DE PREPARATION D'HYDRATES D'ALUMINE A STRUCTURE BOEHMITIQUE DISPERSIBLES DANS L'EAU

(84) Benannte Vertragsstaaten:
**BE DE FR GB IT NL**

(30) Priorität: **04.11.1993 DE 4337643**

(43) Veröffentlichungstag der Anmeldung:
**21.08.1996 Patentblatt 1996/34**

(73) Patentinhaber: **RWE-DEA AKTIENGESELLSCHAFT FÜR MINERALOEL UND CHEMIE**
**22297 Hamburg (DE)**

(72) Erfinder:
• **NOWECK, Klaus**
  **D-25541 Brunsbüttel (DE)**
• **SCHIMANSKI, Jürgen**
  **D-25541 Brunsbüttel (DE)**

• **MEYER, Arnold**
  **D-25693 St. Michaelisdonn (DE)**

(74) Vertreter: **Schupfner, Gerhard D., Dr. Dipl.-Chem. Müller, Schupfner & Gauger,**
**Karlstrasse 5**
**21244 Buchholz (DE)**

(56) Entgegenhaltungen:
**EP-A- 0 125 507      EP-A- 0 177 198**
**EP-A- 0 238 103      EP-A- 0 314 166**
**US-A- 4 202 870      US-A- 4 676 928**

• **CERAMICS INTERNATIONAL, Bd.15, Nr.5, 1989, BARKING (GB) Seiten 255 - 270 G. POUSKOULELI 'Metallorganic compounds as preceramic materials II. Oxide ceramics.'**

**Beschreibung**

Die Erfindung bezieht sich auf ein Verfahren zur Herstellung von in Wasser dispergierbaren, nanokristallinen Tonerdehydraten böhmitischer Struktur.

Die physikalischen und chemischen Eigenschaften von Aluminiumoxidhydraten (Tonerdehydraten) hängen weitestgehend von den Verfahrensmaßnahmen bei der Herstellung ab. Es sind Herstellungsverfahren bekannt, mit denen angestrebt wurde, die für eine bestimmte anwendungstechnische Verwendung speziell benötigte Eigenschaft einzustellen. Auch die Herstellung von wasserdispergierbaren Tonerdehydraten ist bereits beschrieben.

Gemäß der DE 2 408 233-C2 wird säuredispergierbarer Böhmit verwendet und dieses pulverige Material vornehmlich in einem Wirbelbett mit gasförmigen Säuren (z. B. Chlorwasserstoff oder $NO_2$) begast. Dieser Prozeß geht von kommerziell erhältlichen Böhmitpulvern aus, die nachbehandelt werden müssen, um sie wasserdispergierbar zu machen. Aufgrund der gegebenen hohen Kristallinität der Ausgangspulver (> 5 nm, röntgenographisch bestimmt am 021-Reflex des Böhmits) erzielt man aus solchen nachbehandelten Pulvern unter Zusatz von Wasser Dispersionen, die zwar eine hohe Dispergierbarkeit (D > 97 %) aufweisen, jedoch stets in ihrer optischen Erscheinung milchig trübe sind. Diese Dispersionen haben niedrige Transluzenzwerte von 0 - 50 %.

Die Transluzenzwerte sind ein Maß für die Größe der in der Dispersion vorliegenden kolloidalen Böhmitteilchen. Je höher der Transluzenzwert, desto kleiner sind die Kolloide. Je kleiner die Kolloide in der Dispersion, desto größer ist ihre spezifische Oberfläche. Je größer die spezifische Oberfläche, desto stärker sind die Bindekräfte der Partikel.

Gemäß US 4 676 928-A wird Tonerdehydrat-Aufschlämmung aus der wäßrigen Phase des Ziegler-Prozesses mit Säuren versetzt. Die so behandelte Tonerdehydrataufschlämmung wird bei pH-Werten zwischen 5 und 9 einer hydrothermalen Alterung unterzogen und getrocknet. Mit der Alterung einher geht ein starker Anstieg der Kristallinität des Tonerdehydrats. Es werden Kristallitgrößen zwischen 8,5 und 25 nm erreicht. Die aus diesem Prozeß erhaltenen böhmitischen Pulver sind ebenfalls leicht wasserdispergierbar (D > 98 %), führen aber auch zu milchigen bis milchig trüben Dispersionen. Die Transluzenzwerte solcher Dispersionen liegen im Bereich von 0,5 - 50 %, Auch hier ist die Ursache für die Trübheit des Materials die hohe Kristallinität der eingesetzten Tonerdehydrataufschlämmung, die durch die anschließende hydrothermale Alterung noch erhöht wird.

Beide Verfahren sollen hohe Feststoffgehalte (bis zu 30 %) in den gebrauchsfertigen Tonerdehydratdispersionen einstellen. Ein Verdünnen der erhaltenen milchig trüben Dispersionen auf vergleichsweise niedrige Feststoffgehalte (ca. 5 - 10 %) ändert aber nichts an den niedrigen Transluzenzwerten. Die Ursache für die niedrige Transluzenz liegt in der Kristallinität der verwendeten oder hergestellten Ausgangsprodukte. Die so hergestellten Böhmite führen im kolloidalen Zustand zu Partikeln mit einem Durchmesser > 100 nm.

Gemäß EP 0 505 896-A1 werden zur Herstellung wasserdispergierbaren Böhmits kommerziell erhältliche Tonerdehydrate mit unterschiedlichem kristallinen Aufbau (Aluminiumoxidmonohydrate bzw. Aluminiumoxidtrihydrate o. ä.) eingesetzt. In einem Löseprozeß reagiert die hochkristalline Aluminiumkomponente mit hohen Mengen an Salpetersäure bei einem pH-Wert unter 3,5, erhöhtem Druck und der Temperatur zu böhmitischen Tonerdehydraten, die kristallin und wasserdispergierbar sind. Diese Materialien weisen alle Kristallitgrößen oberhalb von 6 nm (gemessen am 021-Reflex) auf und werden vornehmlich zur Schleifmittelherstellung eingesetzt.

EP 0 314 166-A1 beschreibt ein Verfahren zur Herstellung monodispersen keramischen Pulver, wobei Metall (hydro)oxide durch Hydrolyse von Metallverbindungen in Anwesenheit eines Komplexbildners hergestellt werden, wobei die Teilchengröße der herzustellenden Oxidteilchen durch die Menge des Komplexbildners bestimmt wird. Im einzigen Beispiel werden Oxidteilchen mit Teilchengrößen im Bereich von 600 bis 2500 μm hergestellt.

US 4,202,870-A beschreibt ein Verfahren, das dem Verfahren der US 4,676,928-A ähnlich ist. Die Steuerung des Teilchendurchmessers durch Säurezugabe wird nicht erwähnt.

EP 0 238 103-A1 offenbart die Hydrolyse von Metalloxiden in Anwesenheit von unterstöchiometrischen Mengen organischer Säure mit mehr als 6 Kohlenstoffatomen zur Beeinflussung der Korngrößenverteilung.

Nach keinem der beschriebenen Herstellungsverfahren wird auf direktem Wege ein wasserdispergierbares böhmitisches Tonerdehydratpulver erzeugt. Diese Verfahren sind aufwendig, da sie sich auf vorhandene Standardprodukte stützen und versuchen, diese durch nachträgliche kostspielige Veredelungsschritte wasserdispergierbar zu machen. Die Kristallinität der so dargestellten Produkte liegt über 5 nm. Wasserdispergierbare Materialien unterhalb dieser Kristallitgröße stehen bislang nicht zur Verfügung. Durch diese Verfahren wird zwangsläufig die Kristallinität der entstehenden wasserdispergierbaren Materialien weiter erhöht. Damit einhergehend kommt es zur Erniedrigung der Transluzenzwerte solcher Materialien.

Aus den oben erwähnten Zusammenhängen stellte sich die Aufgabe, ein Verfahren zur Herstellung von Tonerdehydraten zu entwickeln, bei welchen die Kristallinität unter gleichzeitiger Beibehaltung der wasserdispergierbaren Eigenschaften erniedrigt ist und damit Tonerdehydrate mit höheren Bindekräften zur Verfügung gestellt werden.

Diese Aufgabe wird erfindungsgemäß dadurch gelöst, daß man Aluminium-trialkoholate oder teilsubstituierte Aluminium-mono- oder -dialkoholate der Kettenlänge $C_2$-$C_{10}$ oder Aluminiumalkoholat-Gemische, wie sie bei der Ziegler-Alfol-Synthese als Zwischenprodukte anfallen, in Gegenwart von unterstöchiometrischen Mengen an Polymerisationsinhibitoren, nämlich monovalenten anorganischen oder organischen Säuren wobei diese organische Säure Ameisensäure, Essigsäure oder Propionsäure oder deren Anhydride sind und die organischen Säuren ggf. eine weitere funktionelle Gruppe besitzen, wobei die Zugabe entweder zum Aluminiumalkoholat und/oder zum Hydrolysewasser erfolgt, durch Hydrolyse und Polykondensation zu böhmitischen nanokristallinen Tonerdehydraten mit Kristallitgrößen von kleiner 4 nm, gemessen am O21-Röntgenreflex, umsetzt, die alkoholischen Bestandteile weitestgehend durch Strippen entfernt und das Reaktionsprodukt ggf. trocknet.

Nach einer Ausführungsform der Erfindung werden als Polymerisationsinhibitoren anorganische Säuren, insbesondere Salzsäure oder HCl-Gas, Salpetersäure oder $NO_2$-Gas, Kohlensäure oder $CO_2$ eingesetzt.

Bevorzugt werden Aluminiumalkoholate der Kettenlänge $C_3$ bis $C_6$ umgesetzt.

Die Polymerisationsinhibitoren werden insbesondere in einem Moläquivalent-Verhältnis von 0,1 bis 1,5, vorzugsweise 0,1 bis 0,5, jeweils bezogen auf 1 Moläquivalent Aluminium, zugesetzt.

Bevorzugt wird in einem Temperaturbereich zwischen 30°C bis 110°C, vorzugsweise zwischen 60°C und 110°C umgesetzt.

Nach einer weiteren Ausführungsform der Erfindung wird dem erhaltenen Tonerdehydrat nach dem Strippen eine weitere unterstöchiometrische Menge an Säure zugesetzt, wobei die oben angegebene obere Grenze nicht überschritten wird.

Nach einer weiteren Ausgestaltung der Erfindung wird eine hydrothermale Nachalterung der wäßrigen Tonerdehydrat-Aufschlämmungen durchgeführt, die die Tonerdehydratteilchen unter Beibehaltung der Struktur so stabilisiert, daß der anschließende Trocknungsprozeß eine Aggregation der Primäragglomerate verhindert.

Die nach dem erfindungsgemäßen Verfahren hergestellten und in Wasser dispergierten Tonerdehydrate mit einem $Al_2O_3$-Gehalt von 1 - 20 %, insbesondere 5 bis 15 %, bevorzugt etwa 10 % werden insbesondere angewendet zur Beschichtung von Werkstoffen wie Glas, Metall oder Kunststoffen, um diese Materialien vor chemischem und/oder thermischem Angriff zu schützen, insbesondere mit einem Zusatz an organischem Viskositätsstellmittel wie Cellulosen, Latices oder Polyacrylaten.

Erfindungsgemäß hergestellte getrocknete Tonerdehydrate werden insbesondere eingesetzt zur Fertigung von Katalysatorträgern mit hoher Festigkeit oder zur Vermischung mit anderen oxidischen Materialien oder ihren Vorstufen auf nanokristalliner Basis zum Aufbau phasenreiner Mischoxidkristalle durch Kalzinierung, insbesondere zur Herstellung von Spinellen oder Mulliten oder zur Herstellung von Hochleistungsschleifmitteln, wobei bevorzugt durch Zusatz von $Al_2O_3$-Kristallisationskeimen, in der Form des Bayerits oder seiner eta-Phase, und Säure ein Gel und daraus nach Dehydratisierung in die alpha-Phase mikrokristalliner Korund herstellt wird.

Durch Einbringen der Polymerisationsmodifikatoren in eine der beiden Reaktionskomponenten oder das Wasser, die zur erfindungsgemäßen Herstellung von synthetischen Tonerdehydraten verwendet werden, kann nachhaltig eine dreidimensionale Verknüpfung der Al-OH-Gruppen unterbunden werden. Normalerweise benötigt die Reaktionsstöchiometrie zur quantitativen Hemmung einer Al-OH-Gruppe mindestens 1 mol des Polymerisationsmodifikators, um ihre Kondensationsfähigkeit während der Hydrolyse oder der Nachalterung zu hemmen. Überraschenderweise stellte sich jedoch heraus, daß die beste Inhibierung bei Verwendung von unterstöchiometrischen Mengen an Polymerisationsmodifikator, also Mengen kleiner 1 mol, erzielt wird. Dabei ist es prinzipiell unerheblich, ob durch Einbringen des Polymerisationsmodifikators in das Al-Alkoholat eine Präkonditionierung der organischen Reaktionskomponente herbeigeführt wird, oder der Polymerisationsmodifikator direkt dem Hydrolysewasser zugesetzt wird. Beide Wege sind möglich.

Durch die erfindungsgemäßen Verfahrensschritte werden erstmals auf direktem Weg nanokristalline böhmitische Tonerdehydrate mit einer Kristallitgröße gemessen am 021-Reflex von < 4,0 nm hergestellt, die wasserdispergierbar sind und klare transluzente Dispersionen ergeben. Die erfindungsgemäß hergestellten nanokristallinen Materialien eröffnen den Zugang zu zahlreichen Anwendungen. So lassen die starken Bindekräfte dieser Materialien temperaturstabile Beschichtungen im Glas-, Keramik- oder Feuerfestbereich zu, ohne daß komplexe netzwerkbildende organische Matrices zur Fixierung der anorganischen Spezies benötigt werden. Beschichtungen mit nanokristallinen Tonerdehydraten ergänzen verbreitete lösungsmittelhaltige Prozesse, wie sie z. B. für die Ormocer-Beschichtungen (organic modified ceramics) eingesetzt werden.

Ormocere basieren auf hydrolysefähigen Aluminiumalkoholaten, die in mehrphasigen Reaktionssystemen mit mindestens bifunktionalen organischen Molekülen umgesetzt werden müssen. Es resultieren nanokristalline Verbindungen, deren Stabilisierung nur in bestimmten organischen Lösungsmitteln gelingt. Diese Materialien sind nicht wasserdispergierbar. Eine Fixierung der Ormoceren auf einem zu beschichtenden Material erfolgt in der Regel durch eine photochemische Reaktion, bei der die vorher eingebrachten bifunktionalen organischen Gruppen verknüpft werden, siehe z. B. DE 3 824 333-A1 und DE 3 834 773-A1.

Für die erfindungsgemäß hergestellten nanokristallinen Tonerdehydrate, die ebenfalls für diese keramischen Anwendungen geeignet sind, wird analog die Bezeichnung Amocere (acid modified ceramics) gebraucht. Im Gegensatz zu Ormoceren werden diese Materialien in wäßrigem Milieu stabilisiert und fixiert.

Neben den oben erwähnten einzigartigen Vorteilen ermöglichen diese Materialien auch Verbesserungen der Produkteigenschaften der daraus hergestellten Katalysatoren für katalytische Anwendungen. Diese bestehen üblicherweise aus einem Träger und einem auf den Träger aufgebrachten katalytischen Material. Als Trägermaterial findet oftmals Aluminiumoxid wegen seiner porösen Struktureigenschaften Verwendung. Eine hohe Porosität ist gewünscht, damit gute Diffusionsgeschwindigkeiten für die Reaktionskomponenten erzielt werden. Der Katalysatorträger muß aber, um den äußeren Kräften, die auf ihn wirken, standhalten zu können, auch eine hohe Bruchfestigkeit aufweisen. Um beides zu verwirklichen, ist es wünschenswert, einen Aluminiumoxidhydrat-Rohstoff zur Verfügung zu haben, der hochporös ist und durch seine hohen Bindekräfte die Bruchfestigkeit positiv beeinflußt. Eine hohe Bindekraft liegt dann vor, wenn das Aluminiumoxidhydrat in seiner katalytisch wirksamen Form, der gamma-Phase, eine hohe Oberfläche aufweist. Die durch das erfindungsgemäß beschriebene Herstellungsverfahren erhaltenen nanokristallinen Tonerdehydrate zeigen in der gamma-Phase im Vergleich zu anderen wasserdispergierbaren Tonerden sehr hohe Oberflächenwerte, und zwar bis zu 345 $m^2$/g nach dreistündiger Aktivierung bei 550°C. Damit eröffnen sich für Materialien mit diesen Produktmerkmalen im Bereich der Stabilisierung von Katalysatorträgern durch die Erhöhung der Bindekräfte auch interessante katalytische Anwendungen.

Die Einsatzgebiete der nanokristallinen wasserdispergierbaren Tonerdehydrate sind vielfältig. So können sie zur Porenmodifizierung bei der Synthese von anorganischen Membranen, zur Herstellung von Schleifmitteln, als Ausgangsstoffe für synthetische phasenreine Mischoxide z. B. Spinelle oder Mullite, als Lackverdicker und als Trägerrohstoff für Katalysatoren Verwendung finden.

Die folgenden Beispiele erläutern das erfindungsgemäße Verfahren und die Verwendung der erfindungsgemäß hergestellten Produkte.

Die zur Charakterisierung der synthetisierten Produkte eingesetzten analytischen Methoden waren:

### 1. <u>Bestimmung der Kristallitgröße</u>

Sie erfolgte durch Auswertung des Röntgenbeugungsdiagramms der synthetisierten Tonerdehydrate am 021-Reflex des Böhmits mit Hilfe der Scherrerformel

$$\text{Kristallitgröße}_{021\text{-Reflex}} \ (nm) = \frac{K \ x \ Lambda \ x \ 57{,}3}{Beta \ x \ \cos 2 \ Theta}$$

worin

K = Konstante für Pulverteilchen (Formfaktor)=0,9
Lambda = Wellenlänge d. Röntgenstrahlung = 0,15406 nm
Beta = korrigierte apparative Linienverbreiterung für Zählrohrgoniometer, reflexabhängig
Theta = reflexabhängig, hier ca. 28°, bedeuten.

### 2. <u>Bestimmung der Dispergierbarkeit</u>

Sie erfolgte durch 10 minütiges Einrühren einer bestimmten Tonerdehydratmenge in eine Wasservorlage. Die Tonerdehydratmenge wurde so gewählt, daß bei 100%iger Dispergierbarkeit 10 % $Al_2O_3$ in der Dispersion vorlagen. Die nicht dispergierten Teilchen dieser Dispersion wurden dann durch Zentrifugation (20 Minuten bei 2400 Upm) abgetrennt. Der nicht dispergierte Anteil wurde 5 Stunden bei 120°C getrocknet und als Rückstand ausgewogen. Die Berechnung erfolgte über die Beziehung:

$$\text{Dispergierbarkeit \% = 100 \% - Rückstand \%}$$

### 3. <u>Bestimmung der Transluzenz</u>

Der Überstand der zentrifugierten Dispersion aus der Dispergierbarkeitsbestimmung wurde 1 : 10 verdünnt und im Spektralphotometer bei 450 nm in einer 1 cm Küvette gegen Wasser als Blindprobe gemessen. Die Transluzenz wurde als Lichtdurchlässigkeit in % angezeigt.

### 4. <u>Bestimmung des Porenvolumens</u>

Sie erfolgte nach der ASTM-Methode D 4284-83 an der 3 Stunden bei 550°C aktivierten Tonerdeprobe. Die Angaben für das Porenvolumen beziehen sich auf eine Auswertung der Porenradien bis 100 nm.

### 5. <u>Bestimmung der Oberfläche</u>

Sie erfolgte an der 3 Stunden bei 550°C aktivierten Tonerdeprobe nach der ASTM-Methode D 4567-86.

**HERSTELLUNGSBEISPIELE**

**Beispiel 1: Menge Polymerisationsmodifikator (PM)**

Dieses Beispiel verdeutlicht anhand der Versuche 1 - 3 den Einfluß, den die Zusatzmenge des Polymerisationsmodifikators, der zur Präkonditionierung der Alkoholatreaktionskomponente dient, auf die Wasserdispergierbarkeit und die erzielbare Transluzenz hat. Diese Zusammenhänge werden in den Versuchen 1 - 3 am Beispiel des Reaktionssystems Essigsäureanhydrid/Al-triisopropylat dargestellt. Die physikalischen Daten der Tonerdehydrate, die aus den Versuchen 1 - 3 erhalten werden, sind in Tabelle 1 zusammengestellt. Überraschenderweise zeigt sich, daß mit einer unterstöchiometrischen Menge an Essigsäureanhydrid (vgl. Versuch Nr. 2) die höchste Wasserdispergierbarkeit und die höchste Transluzenz erreicht wird.

**Versuch 1:**

Molverhältnis PM : Al-alkoholat = 1

Bei 130°C aufgeschmolzenes, mit Isopropanol verdünntes Al-triisopropylat (DOROX[R] D10) (1,47 mol Al) wurde mit 150 g (1,47 mol) Essigsäureanhydrid versetzt. Der sich bildende Essigsäurepropylester wurde abdestilliert. Die verbliebene Reaktionskomponente wurde dann bei ca. 80°C mit destilliertem Wasser im Molverhältnis Al-alkoholat : Wasser = 1 : 26 hydrolysiert. Es bildete sich ein hellweißer Niederschlag an Tonerdehydrat. Diese Tonerdehydrataufschlämmung wurde unter Zusatz von Wasser von der freigesetzten Alkoholkomponente durch azeotrope Destillation weitgehend gereinigt und anschließend 3 Stunden in der Wärme bei 85°C - 90°C gealtert. Dabei wurde die Tonerdehydrataufschlämmung immer lichtdurchlässiger. Der pH-Wert der so erhaltenen, auf Zimmertemperatur abgekühlten Tonerdehydrataufschlämmung betrug 4,3. Die Trocknung der wäßrigen Tonerdehydrataufschlämmung wurde mit Hilfe eines üblichen Laborsprühtrockners vorgenommen.

**Versuch 2:**

Molverhältnis PM : Al-alkoholat = 0,5

Das bei 130°C aufgeschmolzene, mit Isopropanol verdünnte Al-triisopropylat (DOROX[R] D10) (1,47 mol Al) wurde diesmal mit 75 g (0,73 mol) Essigsäureanhydrid versetzt. Die Versuchsdurchführung erfolgte analog zu Versuch Nr. 1. Der resultierende pH-Wert des aus Versuch Nr. 2 erhaltenen auf Zimmertemperatur abgekühlten Tonerdehydratslurries betrug vor Sprühtrocknung 4,6.

**Versuch 3:**

Molverhältnis PM : Al-alkoholat = 0,12

Das bei 130°C aufgeschmolzene mit Isopropanol verdünnte Al-triisopropylat (DOROX[R] D10) (1,47 mol Al) wurde mit 18,5 g (0,18 mol) Essigsäureanhydrid versetzt. Die Versuchsdurchführung erfolgte analog zu Versuch Nr. 1. Der resultierende pH-Wert des aus Versuch Nr. 3 erhaltenen auf Zimmertemperatur abgekühlten Tonerdehydratslurries betrug vor Sprühtrocknung 5,2.

**Beispiel 2: Verwendung von Mischalkoholaten oder Al-tri-n-hexanolat**

Beispiel 2 zeigt anhand des Versuchs 4, daß erfindungsgemäß auch die Verwendung von längerkettigen Al-alkoholaten zu Tonerdehydraten führt, die wasserdispergierbar sind und eine hohe Transluzenz aufweisen. Dieser Zusammenhang wird im Versuch 4 am Beispiel des Reaktionssystems Essigsäureanhydrid/Al-tri-n-hexanolat dargestellt.

Die physikalischen Daten des Tonerdehydrats, das nach Versuch 4 erhalten wird, sind auch in Tabelle 1 festgehalten. Überraschenderweise zeigt sich, daß bei Verwendung von unterstöchiometrischen Mengen an Essigsäureanhydrid trotz langsamerer Hydrolysegeschwindigkeit des längerkettigen Al-tri-n-hexanolats im Vergleich zu kurzkettigen Al-triisopropylat (vgl. Versuch 2) eine gleichhohe Wasserdispergierbarkeit und Transluzenz erreicht wird.

**Versuch 4:**

Molverhältnis PM : Al-alkoholat = 0,5

1,47 mol aufgeschmolzenes hexanolhaltiges Al-tri-n-hexanolat oder Mischalkoholat aus dem Ziegler/Alfol-Prozeß wurden bei 130°C mit 0,73 mol Essigsäureanhydrid versetzt. Diese Reaktionskomponente wurde dann bei etwa 80°C mit destilliertem Wasser im Molverhältnis Al-alkoholat : Wasser = 1 : 26 hydrolysiert. Es bildete sich ein weißer Niederschlag an Tonerdehydrat. Diese Tonerdehydrataufschlämmung wurde unter Zusatz von Wasser von der freigesetzten Alkohol- bzw. Esterkomponente durch Destillation weitgehend gereinigt und anschließend 3 Stunden bei 85°C - 90°C gealtert. Dabei wurde die Tonerdehydrataufschlämmung immer lichtdurchlässiger. Der pH-Wert der so erhaltenen, auf Zimmertemperatur abgekühlten Tonerdehydrataufschlämmung betrug 4,0. Die Trocknung der wäßrigen Tonerdehydrataufschlämmung wurde mit Hilfe eines üblichen Laborsprühtrockners vorgenommen.

**Beispiel 3: Nachalterungszeit**

Beispiel 3 zeigt, daß erfindungsgemäß die Nachalterungszeit der gestrippten Tonerdehydrataufschlämmung einen positiven Einfluß auf die Wasserdispergierbarkeit und die erzielbare Transluzenz des dispergierten Tonerdehydratpulvers hat. Im Reaktionssystem Essigsäure/Al-triisopropylat wird dieser Zusammenhang besonders deutlich, wenn wie in den Versuchen 5 und 6 extrem unterstöchiometrische Einsatzmengen an Polymerisationsmodifikator (0,12 mol/mol Al) verwendet werden.
Die physikalischen Daten der Tonerdehydrate, die sich aus den Versuchen 5 und 6 ergeben, sind auch in Tabelle 1 zusammengestellt.

**Versuch 5 und Versuch 6:**

Molverhältnis PM : Al-alkoholat = 0,12

Die Versuche 5 und 6 wurden entsprechend Versuch 3 durchgeführt. Anstelle des Essigsäureanhydrids aus Versuch 3 wurde hier jedoch in beiden Versuchen Essigsäure (0,18 mol) als Polymerisationsmodifikator eingesetzt. Die Alterungszeit wurde von 3 Stunden 85°C -90°C in Versuch 5 auf 8 Stunden 85°C - 90°C in Versuch 6 erhöht.

Tabelle 1:

| Physikalische Daten der AMOCERE der Versuche 1 - 6 | | | | | | |
|---|---|---|---|---|---|---|
| Beispiel | 1 | | | 2 | 3 | |
| Versuch | Nr. 1 | Nr. 2 | Nr. 3 | Nr. 4 | Nr. 5 | Nr. 6 |
| Al-Alkoholat | Al-triisoprop. | Al-triisoprop. | Al-triisoprop. | Al-tri-n-hexanolat | Al-triisoprop. | Al-triisoprop. |
| Polymerisations-modifikator | Essigs.-anhydrid | Essigs.-anhydrid | Essigs.-anhydrid | Essigs.-anhydrid | Essigsäure | Essigsäure |
| mol Polymerisations-modifikator / mol Al | 1.0 | 0.5 | 0.12 | 0.5 | 0.12 | 0.12 |
| Alterungszeit und Temperatur | 3 h 85-90°C | 3 h 85-90°C | 3 h 85-90°C | 3 h 85-90°C | 3 h 85-90°C | 8 h 85.90°C |
| % Al2O3 | 50.7 | 59.6 | 70.3 | 63.1 | 65.9 | 69.2 |
| 10%ige Al2O3-Dispersion in H2O % Dispergierbarkeit | 93.9 | 97.9 | 82.6 | 99.1 | 90.9 | 98.2 |
| % Transluzenz | 79.8 | 97.4 | 74.0 | 97.8 | 71.6 | 85.0 |

Tabelle 1:   (fortgesetzt)

| Physikalische Daten der AMOCERE der Versuche 1 - 6 | | | | | | |
|---|---|---|---|---|---|---|
| Beispiel | 1 | | | 2 | 3 | |
| Versuch | Nr. 1 | Nr. 2 | Nr. 3 | Nr. 4 | Nr. 5 | Nr. 6 |
| Kristallitgröße (nm) | < 4 | < 4 | < 4 | < 4 | < 4 | < 4 |
| Oberfläche ($m^2$/g) 3h 550°C | 345 | 303 | 283 | 318 | 288 | 293 |
| Porenvolumen (ml/g) 3h 550°C | 0.85 | 0.72 | 0.50 | 0.61 | 0.56 | 0.74 |
| Phase | nanokristalliner Böhmit | | | | | |
| pH-Wert der Aufschlämmung vor der Trocknung | 4.3 | 4.6 | 5.2 | 4.0 | 5.1 | 5.7 |

**Beispiel 4: Zusätzliche Säuremenge**

Beispiel 4 zeigt, daß entsprechend den erfindungsgemäßen Ansprüchen die weitere Zugabe einer monovalenten Säure, z. B. in die Tonerdehydrataufschlämmung nach der Alterung der gestrippten Tonerdehydrataufschlämmung einen positiven Einfluß auf die Wasserdispergierbarkeit und die erzielbare Transluzenz des dispergierten Tonerdehydratpulvers hat. Die zweite Zugabe, hier an Essigsäure, dient nicht mehr der Polymerisationshemmung, sondern beeinflußt die wasserdispergierenden Eigenschaften des resultierenden Tonerdehydrats. Zusätzlich zur Erhöhung der Wasserdispergierbarkeit wird auch eine viskositätsstabilere Dispersion erhalten. Im Reaktionssystem Essigsäure/Al-triisopropylat wird dieser Zusammenhang durch die Versuche 7 und 8 dargestellt. Die physikalischen Daten der Tonerdehydrate, die aus den Versuchen 7 und 8 erhalten werden, und der Einfluß auf die Stabilisierung der Viskosität der Dispersion durch die zweite Säuremenge sind in Tabelle 2 zusammengestellt.

**Versuch 7:** Molverhältnis PM : Al-alkoholat = 0,5

1,47 mol aufgeschmolzenes isopropanolhaltiges Al-triisopropylat wurde bei 95°C mit 0,73 mol Essigsäure versetzt. Diese Reaktionsmischung wurde dann bei etwa 80°C mit destilliertem Wasser im Molverhältnis Al-alkoholat : Wasser = 1 : 26 hydrolysiert. Die sich bildende Tonerdehydrataufschlämmung wurde unter Zusatz von Wasser von dem Alkohol durch Destillation weitgehend gereinigt und anschließend 3 Stunden bei 85°C - 90°C gealtert. Die erhaltene Tonerdehydrataufschlämmung wurde wie im Versuch 1 beschrieben aufgearbeitet.

**Versuch 8:**

Molverhältnis PM : Al-alkoholat = 0,5

Es wurde in Versuch 8 analog zu Versuch 7 verfahren, jedoch wurde der gestrippten Tonerdehydrataufschlämmung nach der üblichen Alterungszeit (3 Stunden bei 85°C - 90°C) eine zweite Menge an Essigsäure (0,06 mol/mol Al) zugegeben. Die so angesäuerte Tonerdehydrataufschlämmung wurde wie in Versuch 1 beschrieben aufgearbeitet.

**Beispiel 5: Verschiedene organische Säuren**

Beispiel 5 zeigt, daß erfindungsgemäß die Verwendung von verschiedenen monovalenten organischen Säuren als Polymerisationsmodifikatoren möglich ist. Im Reaktionssystem Essigsäure bzw. Propionsäure bzw. Milchsäure und Al-tri-n-hexanolat wird dieser Zusammenhang in den Versuchen 9, 10 und 11 dargestellt. Die physikalischen Daten der Tonerdehydrate, die aus den Versuchen 9, 10 und 11 resultieren, sind in Tabelle 2 festgehalten.

**Versuch 9:**

Molverhältnis PM : Al-alkoholat = 0,12

1,47 mol aufgeschmolzenes hexanolhaltiges Al-tri-n-hexanolat wurde bei 90°C mit 0,18 mol Essigsäure versetzt. Diese trübe Reaktionsmischung wurde bei etwa 80°C mit destilliertem Wasser im Molverhältnis Al-alkoholat : Wasser = 1 : 26 hydrolysiert. Die sich bildende Tonerdehydrataufschlämmung wurde unter Zusatz von Wasser von dem Alkohol durch Destillation weitgehend befreit und anschließend 3 Stunden bei 85°C - 90°C gealtert. Gemäß den Erfahrungen aus Beispiel 4 wurde der Tonerdehydrataufschlämmung eine zweite Essigsäuremenge (0,017 mol/mol Al) zugegeben. Der pH-Wert der Tonerdehydrataufschlämmung vor der Sprühtrocknung betrug 4,2. Die Aufarbeitung erfolgte wie in Versuch 1 beschrieben.

**Versuch 10:**

Molverhältnis PM : Al-alkoholat = 0,12

Die Essigsäuremengen des Versuchs 9 wurden durch Propionsäure ersetzt und eine Tonerdehydrataufschlämmung erhalten mit pH 4,6 vor der Sprühtrocknung. Die Aufarbeitung erfolgte wie in Versuch 1 beschrieben.

**Versuch 11:**

Molverhältnis PM : Al-alkoholat = 0,12

Die Essigsäuremengen des Versuchs 9 wurden durch Milchsäure ersetzt und die zweite Milchsäurezugabemenge auf 0,06 mol/mol Al erhöht. Es wurde eine Tonerdehydrataufschlämmung erhalten mit pH 4,5 vor der Sprühtrocknung. Die Aufarbeitung erfolgte wie in Versuch 1 beschrieben.

**Beispiel 6: Verschiedene anorganische Säuren**

Beispiel 6 zeigt, daß erfindungsgemäß der Einsatz von verschiedenen monovalenten anorganischen Säuren bzw. Säureanhydriden als Polymerisationsmodifikatoren möglich ist. Im Reaktionssystem HCl-Gas bzw. Salpetersäure und Al-tri-n-hexanolat wird dieser Zusammenhang in den Versuchen 12 und 13 dargestellt. Die physikalischen Daten der Tonerdehydrate, die aus den Versuchen 12 und 13 erhalten wurden, sind in Tabelle 2 zusammengestellt.

**Versuch 12:**

Molverhältnis PM : Al-alkoholat = 0,12

Bei 90°C wurden 0,18 mol HCl-Gas in 1,47 mol aufgeschmolzenes hexanolhaltiges Al-tri-n-hexanolat eingeleitet. Die grünliche Reaktionsmischung wurde bei etwa 80°C mit destilliertem Wasser im Molverhältnis Al-alkoholat : Wasser = 1 : 26 hydrolysiert. Die sich bildende Tonerdehydrataufschlämmung wurde unter Zusatz von Wasser von dem Alkohol durch Destillation weitgehend befreit und anschließend 3 Stunden bei 85°C - 90°C gealtert. Die erhaltene Tonerdehydrataufschlämmung hatte einen pH-Wert von 3,9. Sie wurde wie in Versuch 1 beschrieben aufgearbeitet.

**Versuch 13:**

Molverhältnis PM : Al-alkoholat = 0,12

Der Versuch 13 wurde analog zu Versuch 12 durchgeführt, jedoch wurde anstelle der HCl-Gaseinleitung rauchende Salpetersäure (0,18 mol) in das Al-alkoholat eingetropft. Der pH-Wert des Tonerdehydratslurry vor der Sprühtrocknung betrug 5,0. Die Aufarbeitung erfolgte wie in Versuch Nr. 1 beschrieben.

Tabelle 2:

| Physikalische Daten der AMOCERE der Versuche 7 - 13 | | | | | | | |
|---|---|---|---|---|---|---|---|
| Beispiel | 4 | | 5 | | | 6 | |
| Versuch | Nr. 7 | Nr. 8 | Nr. 9 | Nr. 10 | Nr. 11 | Nr. 12 | Nr. 13 |
| Al-Alkoholat | Al-triisoprop. | Al-triisoprop. | Al-tri-n-hexanotat | Al-tri-n-hexanolat | Al-tri-n-hexanolat | Al-tri-n-hexanolat | Al-tri-n hexanolat |
| Polymerisations-modifikator | Essigsäure | Essigsäure | Essigsäure | Propionsäure | Miichsäure | HCl-Gas | HNO3 rauchend |
| mol Polymerisations-modifikator / mol Al | 0.5 | 0.5 | 0.12 | 0.12 | 0.12 | 0.12 | 0.12 |
| Alterungszeit und Temperatur | 3 h 85-90°C | 3 h 85-90°C | 3 h 85-90°C | 3 h 85-90°C | 3 h 85-90°C | 3 h 85-90°C | 3 h 85-90°C |
| zusätzliche Säurezugabe (mol/mol Al) | ohne | 0.06 nach der Alterung | 0.017 nach der Alterung | 0.017 nach der Alterung | 0.06 nach der Alterung | ohne | ohne |
| % Al2O3 | 57.3 | 57.4 | 66.6 | 68.1 | 61.9 | 66.2 | 64.5 |
| 10%ige Al2O3-Dispersion in H2O<br>% Dispergierbarkeit<br>% Transmission<br>Viskosität nach<br>1 Tag (mPas)<br>5 Tagen (mPas) | 94.5<br>93.8<br>54<br>1480 | 98.0<br>96.3<br>24<br>54 | 99.3<br>95.5<br>n. b.<br>n. b. | 98.7<br>92.4<br>n. b.<br>n. b. | 99.1<br>96.1<br>n. b.<br>n. b. | 98.5<br>94.5<br>n. b.<br>n. b. | 97.6<br>94.9<br>n. b.<br>n. b. |
| Kristallitgröße (nm) | < 4 | < 4 | < 4 | < 4 | < 4 | < 4 | < 4 |
| Oberfläche $(m^2/g>$ 3h 550°C | 317 | 321 | 300 | 299 | 335 | 222 | 277 |
| Porenvolumen (ml/g) 3h 550°C | 0.67 | 0.71 | 0.54 | 0.54 | 0.38 | 0.31 | 0.38 |

EP 0 726 877 B1

Tabelle 2: (continued)

| Physikalische Daten der AMOCERE der Versuche 7 - 13 | | | | | | | |
|---|---|---|---|---|---|---|---|
| Beispiel | 4 | | 5 | | | 6 | |
| Phase | nanokristalliner Böhmit | | | | | | |
| pH-Wert der Aufschlämmung vor der Trocknung | < 6 | < 6 | 4.2 | 4.6 | 4.5 | 3.9 | 5.0 |

EP 0 726 877 B1

**Beispiel 7: Polymerisationsmodifikatoren in der Wasserphase**

Beispiel 7 zeigt in den Versuchen 14 und 15, daß die hyrolysefähigen Al-alkoholate auch ohne Präkonditionierung an der dreidimensionalen Verknüpfung, der sich in der Hydrolyse bildenden Al(OH)-Gruppen, gehindert werden können. Dies gelingt durch Versetzen der zur Hydrolyse eingesetzten Wasserphase mit den beanspruchten Polymerisationsmodifikatoren. Versuch 14 verwendet Al-triisopropylat und wäßrige Essigsäure und Versuch 15 verwendet Al-tri-n-hexanolat und wäßrige $HNO_3$ als Reaktanten. Die physikalischen Daten der Tonerdehydrate, die aus diesen Versuchen erhalten werden, sind in Tabelle 3 festgehalten.

**Versuch 14:**

Molverhältnis PM : Al-alkoholat = 0,17

1,15 mol aufgeschmolzenes isopropanolhaltiges Al-triisopropylat (DOROX$^R$ D10) wurde sukzessive bei 80°C in Wasser, welches zuvor mit 11,9 g Essigsäure (0,173 mol/mol Al) angesäuert wurde, eingetropft. Das Molverhältnis Al-alkoholat : Wasser betrug 1 : 41. Diese Reaktionsmischung wurde etwa 45 Minuten bei 80°C gehalten. Die erhaltene Tonerdehydrataufschlämmung wurde unter Zusatz von Wasser von dem Alkohol durch Destillation befreit und anschließend 4 Stunden bei 95°C gealtert. Die Aufarbeitung erfolgte wie in Versuch 1 beschrieben.

**Versuch 15:**

Molverhältnis PM : Al-alkoholat = 0,17

1,15 mol aufgeschmolzenes hexanolhaltiges Al-tri-n-hexanolat wurde sukzessive bei 75°C in Wasser, welches zuvor mit 20,1 g $HNO_3$ (65%ig) (0,194 mol/mol Al) angesäuert wurde, eingetropft. Das Molverhältnis Al-alkoholat : Wasser betrug 1 : 15. Diese Reaktionsmischung wurde ca. 60 Minuten bei 75°C gehalten. Die erhaltene Tonerdehydrataufschlämmung wurde unter Zusatz von Wasser von dem Alkohol durch Destillation weitgehend befreit und anschließend 6 Stunden in der Wärme bei 95°C gealtert. Die Aufarbeitung erfolgte wie in Versuch 1 beschrieben.

**ANWENDUNGSBEISPIELE**

Beispiel 8: Glasbeschichtung

Beispiel 8 zeigt in Versuch 16, daß mit Hilfe dieser dispergierten nanokristallinen Tonerdehydratteilchen eine durchsichtige Beschichtung auf einem Werkstoff, hier Glas, aufgetragen werden kann. Diese Beschichtung erfolgt aus der wäßrigen Phase und benötigt keine komplexen Lösungsmittelsysteme, wie bei bisher üblichen Verfahren. Die Beschichtungsdicke kann durch die Viskosität der Dispersion gesteuert werden. Die Fixierung der Beschichtungsschicht auf dem Werkstoff (hier Glas) erfolgt durch einfache Trocknung (bei 20°C - 120°C). Diese Beschichtung wird nach der Trocknung bei Temperaturen über 450°C in die gamma-Phase umgewandelt und wirkt dann als chemischer und/oder thermischer Schutz vor Zerstörung für den beschichteten Werkstoff.

**Versuch 16:**

11,3 g des Tonerdehydratpulvers aus Versuch 15 wurden in 68,7 g Wasser eingerührt. Nach 10minütigem Rühren entstand eine 10%ige $Al_2O_3$-haltige Dispersion, die in einer Laborzentrifuge (20 Minuten bei 2400 Upm) von undispergiertem Material befreit wurde. Die Viskosität der Dispersion war kleiner 20 mPas. Um eventuelle Lufteinschlüsse zu entfernen, wurde die Dispersion evakuiert. Als Beschichtungswerkstoff dienten handelsübliche Objektträger (75 x 25 x 3 mm), die normalerweise zu mikroskopischen Zwecken eingesetzt werden. Vor der Beschichtungsprozedur wurden sie entfettet und entstaubt. Um eine gleichmäßige Beschichtung zu gewährleisten, wurden die in die Dispersion eingetauchten Objektträger nach einer Tauchzeit von etwa 2 min mit Hilfe des Motors (Geschwindigkeit etwa 2,5 cm/min) herausgezogen. Durch dieses langsame Herausziehen war eine dünne gleichmäßige Schicht garantiert. Nach Trocknung bei Raumtemperatur wurden die beschichteten Objektträger im Muffelofen bei 550°C behandelt.

Zur Prüfung der thermischen Widerstandsfähigkeit dieser beschichteten Objektträger wurde sie im Vergleich zu einem unbeschichteten Objektträger 3 min in die Flamme eines Brenners gehalten. Bei dieser Temperaturbeanspruchung (T > 1300°C) schmolz das unbeschichtete Material. Der beschichtete Objektträger blieb überraschenderweise formstabil.

Tabelle 3:

| Physikalische Daten der AMOCERE der Versuche 14 - 15 | | |
|---|---|---|
| Beispiel | 7 | |
| Versuch | Nr. 14 | Nr. 15 |
| Al-Alkoholat | Al-triisoprop. | Al-tri-n-hexanolat |
| Polymerisations-modifikator | Essigsäure | Salpetersäure |
| mol Polymerisations-modifikator / mol Al | 0.17 | 0.17 |
| Alterungzeit und Temperatur | 4 h 95°C | 6 h 95°C |
| % Al2O3 | 69.2 | 72.5 |
| 10%ige Al2O3-Dispersion in H2O<br>% Dispergierbarkeit<br>% Transmission | 98.0<br>94.2 | 98.8<br>91.1 |
| Kristallitgröße (nm) | < 4 | < 4 |
| Oberfläche (m2/g) 3h 550°C | 320 | 296 |
| Phase | nanokristalliner Böhmit | |

### Beispiel 9: Trägerherstellung

Beispiel 9 zeigt anhand von Versuch 17, daß die Herstellung von stabilen Katalysatorträgern (hier in Kugelform) über bekannte Verfahren (DE 3 212 249-C2) möglich ist. Es entstanden stabile Träger mit hochfesten Oberflächen in der gamma-Phase. Die physikalischen Daten des Kugelträgers sind in **Tabelle 4** zusammengestellt.

### Versuch 17:

Als Basis für die Herstellung eines kugelförmigen Katalysatorträgers diente Tonerdehydrat aus Versuch 15. Es wurden 40,8 g Tonerdehydratpulver in 158,3 g Wasser, welches vorher mit 0,5 g $HNO_3$ (65%ig) versetzt wurde, eingerührt. Nach 10minütigem Rühren wurde die erhaltene Dispersion entlüftet. Der kugelförmige Katalysatorträger wurde durch Vertropfung dieser Dispersion über eine 0,8 mm Düse in 6 %iges Ammoniakwasser hergestellt. Die Tonerdehydratkugeln wurden gewaschen, getrocknet und 3 Stunden bei 550°C im Muffelofen zur katalytisch wirksamen gamma-Phase umgewandelt.

Tabelle 4:

| Physikalische Daten des Kugelträgers (3 h/550°C aktiviert) aus Versuch 17 | |
|---|---|
| Festigkeit | 200 N/Kugel |
| Wasserstabilität | 100 % |
| Durchmesser | 1,74 mm |
| Oberfläche | 261 m2/g |
| Porenvolumen (bis 100 nm) | 0,49 ml/g |

### Beispiel 10: Mischoxidherstellung

Beispiel 10 verdeutlicht anhand der Versuche 18 und 19, daß Mischoxide wie z. B. der MgO-Spinell oder der Mullit auf Basis der wasserdispergierbaren Tonerdehydrate hergestellt werden können. Das Besondere bei diesem Herstellungsverfahren für Mischoxide ist, daß synthetische oxidische Komponenten im nanokristallinen Bereich so gleichmäßig fixiert werden, daß beim anschließenden Kalzinierungsschritt der Kristallaufbau des Mischoxids phasenrein erfolgen kann.

**Versuch 18: Spinellherstellung**

Spinellstöchiometrie = 72 % $Al_2O_3$/28 % MgO

Eine wäßrige Dispersion des Tonerdehydratpulvers aus Versuch 14, die 10 % $Al_2O_3$ enthielt, wurde unter Rühren mit einer 50%igen Magnesiumacetatlösung versetzt, bis die Spinellstöchiometrie erreicht war. Nach 10minütigem Rühren wurde die Dispersion sprühgetrocknet. Das so erhaltene Tonerdehydratpulver wurde bei 700°C und 1300°C kalziniert und zeigte einen phasenreinen Kristallaufbau des MgO-Spinells.

**Versuch 19: Mullitherstellung**

Mullitstöchiometrie = 72 % $Al_2O_3$/28 % $SiO_2$

Durch Ionenaustausch einer 6%igen Natriumwasserglaslösung wurde natriumfreie ortho-Kieselsäure erhalten. Diese Kieselsäure wurde in eine 10 % $Al_2O_3$-haltige wäßrige Dispersion des Tonerdehydratpulvers aus Versuch 15 eingerührt, bis die Mullitstöchiometrie erreicht war. Die Dispersion wurde sprühgetrocknet und anschließend 3 Stunden bei 1250°C kalziniert. Das Röntgenspektrum zeigte einen phasenreinen Kristallaufbau des Mullits.

**Beispiel 11: Schleifmittelherstellung**

Hochleistungsschleifmittel basieren heute vielfach auf mikrokristallinem Korund. Auf Basis der Tonerdehydrate, die durch das erfindungsgemäße Verfahren dargestellt wurden, gelang die Herstellung von mikrokristallinem. Überraschenderweise entstand besonders geeigneter Korund durch den Zusatz von Kristallisationskeimen von Tonerde in der eta-Phase zur Tonerdedispersion. Beispiel 11 veranschaulicht dies durch Versuch 20.

**Versuch 20:**

Das in Versuch 15 hergestellte Produkt wurde zur Herstellung einer 20%igen $Al_2O_3$ enthaltenden Dispersion verwendet. Dieser Dispersion wurde 1,0 % feinkörnige Tonerde (100 % < 2 µm und 50 % < 0,6 µm) in der eta-Phase als Kristallisationskeime zugesetzt. Die verdickte Dispersion wurde bei 120°C getrocknet und bei 1130°C zu alpha-Tonerde umgewandelt. Durch die verwendeten Kristallkeime in der eta-Phase gelang es bei niedrigen Temperaturen, mikrokristalline alpha-Tonerde herzustellen. Die Kristallitgröße dieses Korunds liegt zwischen 60 nm und 90 nm (gemessen am 113-Reflex). Dieser Korund ist hervorragend als Hochleistungsschleifmittel geeignet.

**Patentansprüche**

1. Verfahren zur Herstellung von in Wasser dispergierbaren Tonerdehydraten böhmitischer Struktur, welche in wäßriger Dispersion hohe **Transluzenzwerte** haben, dadurch gekennzeichnet, daß man Aluminium-trialkoholate oder teilsubstituierte Aluminium-mono- oder -dialkoholate der Kettenlänge C2 bis C10 oder Aluminiumalkoholatgemische, wie sie bei der Ziegler-Alfol-Synthese als Zwischenprodukte anfallen, in Gegenwart von unterstöchiometrischen Mengen an Polymerisationsinhibitoren nämlich monovalenten anorganischen Säuren oder

   organischen Säuren, wobei diese organischen Säuren **Ameisensäure, Essigsäure oder Propionsäure** oder deren Anhydride sind und die organischen Säuren ggf. eine weitere funktionelle Gruppe besitzen, insbesondere die Hydroxyl-Gruppe, die Chlorid-Gruppe oder die Amino-Gruppe, wobei die Zugabe entweder zum Aluminiumalkoholat und/oder zum Hydrolysewasser erfolgt, durch Hydrolyse und Polykondensation zu böhmitischen nanokristallinen Tonerdehydraten mit Kristallitgrößen von **kleiner 4 nm,** gemessen am 021-Röntgenreflex, umsetzt, die alkoholischen Bestandteile weitestgehend entfernt und das Reaktionsprodukt ggf. trocknet.

2. Verfahren nach Anspruch 1, dadurch gekennzeichnet, daß die Polymerisationsinhibitoren als anorganische Säuren Salzsäure oder HCl-Gas, Salpetersäure oder $NO_2$-Gas, Kohlensäure oder $CO_2$ sind.

3. Verfahren nach Anspruch 1 oder Anspruch 2, **dadurch gekennzeichnet,** daß man Aluminiumalkoholate der Kettenlänge $C_3$ bis $C_6$ umsetzt.

4. Verfahren nach einem der vorhergehenden Ansprüche, **dadurch gekennzeichnet,** daß man die Polymerisationsinhibitoren in einem Moläquivalent-Verhältnis von 0,1 bis 1,5, vorzugsweise 0,1 bis 0,5, jeweils bezogen auf 1 Moläquivalent Aluminium, zusetzt.

5.  Verfahren nach einem der Ansprüche 1 bis 4,
    **dadurch gekennzeichnet,** daß man in einem Temperaturbereich zwischen 30°C bis 110°C und vorzugsweise zwischen 60°C und 100°C umsetzt.

6.  Verfahren nach einem der Ansprüche 1 bis 5,
    **dadurch gekennzeichnet,** daß man dem erhaltenen Tonerdehydrat nach dem Strippen eine weitere unterstöchiometrische Menge an Säure zusetzt, wobei die in Anspruch 4 angegebene obere Grenze nicht überschritten wird.

7.  Verfahren nach einem der Ansprüche 1 bis 6,
    **dadurch gekennzeichnet,** daß man eine hydrothermale Nachalterung der wäßrigen Tonerdehydrat-Aufschlämmungen durchführt, die die Tonerdehydratteilchen unter Beibehaltung der Struktur so stabilisiert, daß der anschließende Trocknungsprozeß eine Aggregation der Primäragglomerate verhindert.

## Claims

1.  A process for producing water-dispersible alumina hydrates of boehmite structure having high translucency values in aqueous dispersion, characterized in that
    conversion is carried out of aluminum trialcoholates or partially substituted aluminum monoalcoholates or dialcoholates having the chain length of $C_2$ - $C_{10}$ or aluminum alcoholate mixtures, such as those obtained as intermediates in the Ziegler-Alfol synthesis,

    in the presence of understoichiometric quantities of polymerization inhibitors, namely monovalent inorganic or organic acids said organic acids being formic acid, acetic acid or propionic acid or the anhydrides thereof which may optionally have an additional functional group, particularly the hydroxyl group, the chloride group or the amino group,
    the addition taking place either to the aluminum alcoholate and/or to the water of hydrolysis,
    by hydrolysis and polycondensation to nanocrystalline alumina hydrates having crystallite sizes of less than 4 nm, determined on the 021 X-ray reflex,
    the alcoholic components are substantially removed, and the reaction product is dried if necessary.

2.  The process according to claim 1, characterized in that said polymerization inhibitors as inorganic acids are hydrochloric acid or HCl gas, nitric acid or $NO_2$ gas, carbonic acid or $CO_2$.

3.  The process according to claim 1 or claim 2, characterized in that aluminum alcoholates having the chain length of $C_3$ to $C_6$ are converted.

4.  The process according to any one of the preceding claims, characterized in that the polymerization inhibitors are added at a mole equivalent ratio of from 0.1 to 1.5, preferably from 0.1 to 0.5, each based on 1 mole equivalent of aluminum.

5.  The process according to any one of claims 1 to 4, characterized in that the conversion is carried out at temperatures between 30 °C and 110 °C, preferably between 60 °C and 100 °C.

6.  The process according to any one of claims 1 to 5, characterized in that an additional understoichiometric quantity of acid is added to the alumina hydrate obtained after stripping, whereby the upper limit as defined in claim 4 is not exceeded.

7.  The process according to any one of claims 1 to 6, characterized in that the aqueous alumina hydrate suspensions are subjected to hydrothermal post-aging whereby the alumina hydrate particles are stabilized without altering their structures such that the subsequent drying step prevents aggregation of the primary agglomerates.

**EP 0 726 877 B1**

**Revendications**

1. Procédé pour la préparation d'hydrates d'alumine dispersibles dans l'eau à structure boehmitique, qui ont en dispersion aqueuse de hautes valeurs de translucidité, caractérisé en ce que l'on convertît, par hydrolyse et polycondensation, des trialcoolates d'aluminium ou des mono- ou dialcoolates d'aluminium partiellement substitués, de longueur de chaîne $C_2$ à $C_{10}$ ou des mélanges d'alcoolates d'aluminium, comme ceux qui apparaissent en tant que produits intermédiaires dans la synthèse de Ziegler-Alfol, en présence de quantités sous-stoechiométriques d'inhibiteurs de polymérisation, à savoir des acides minéraux ou organiques monovalents, ces acides organiques étant l'acide formique, l'acide acétique ou l'acide propionique, ou leurs anhydrides, et les acides organiques possédant le cas échéant un autre groupement fonctionnel, en particulier le groupement hydroxyle, le groupement chlorure ou le groupement amino, l'addition s'effectuant à l'alcoolate d'aluminium et/ou à l'eau d'hydrolyse, en hydrates d'alumine nanocristallins boehmitiques avec des tailles de cristallites inférieures à 4 nm mesurées sur le plan de réflexion 021 des rayons X, les composants alcooliques étant le plus largement éliminés et le produit de réaction étant le cas échéant séché.

2. Procédé selon la revendication 1, caractérisé en ce que les inhibiteurs de polymérisation sont, en tant qu'acides minéraux, l'acide chlorhydrique ou l'HCl gazeux, l'acide nitrique ou le $NO_2$ gazeux, l'acide carbonique ou le $CO_2$.

3. Procédé selon la revendication 1 ou la revendication 2, caractérisé en ce que l'on convertit des alcoolates d'aluminium de la longueur de chaîne $C_3$ à $C_6$.

4. Procédé selon l'une des revendications précédentes, caractérisé en ce que l'on ajoute les inhibiteurs de polymérisation dans une proportion d'équivalent molaire de 0,1 à 1,5, de préférence de 0,1 à 0,5, chaque fois par rapport à 1 équivalent molaire d'aluminium.

5. Procédé selon l'une des revendications 1 à 4, caractérisé en ce que l'on fait la conversion dans une plage de température entre 30°C et 110°C et de préférence entre 60°C et 100°C.

6. Procédé selon l'une des revendications 1 à 5, caractérisé en ce qu'après le stripage, on ajoute à l'hydrate d'alumine obtenu une autre quantité sous-stoechiométrique d'acide, la limite supérieure donnée dans la revendication 4 n'étant pas dépassée.

7. Procédé selon l'une des revendications 1 à 6, caractérisé en ce que l'on effectue un vieillissement hydrothermal des suspensions aqueuses d'hydrate d'alumine, qui stabilise les particules d'hydrate d'alumine en conservant la structure de telle sorte que le processus de séchage qui suit empêche une agrégation des agglomérats primaires.